# EUROPEAN PATENT APPLICATION

(11) **EP 2 887 026 A2**
(43) Date of publication of application: **24.06.2015**
(21) Application number: 14195571.6
(22) Date of filing: 01.12.2014
(51) Int. Cl.: G01D 5/353, G01H 9/00

(54) **Flexible optical sensor module**

(30) Priority: 01.12.2013 US 201361910358 P; 28.11.2014 US 201414555732
(71) Applicant: Wu, Mao-Jen, Kaohsiung City 801 (TW)
(72) Inventor: Wu, Mao-Jen, Kaohsiung City 801 (TW); Chang, Chia-Chi, Taipei City 114 (TW); Wu, Mao-Jen, Kaohsiung City 807 (TW); Lin, Chi-Hsiang, Taoyuan County 325 (TW); Lin, Shu-Hsuan, Taipei City 241 (TW)
(74) Representative: Zaboliene, Reda

(57) **Abstract**

A flexible optical sensor module is proposed. The flexible optical sensor module comprises a supporting substrate and a flexible waveguide. The supporting substrate has a first trench and a second trench, wherein the first trench has a first optical micro-reflection surface and a second optical micro-reflection surface at two sides of the first trench. The flexible waveguide disposed on the first trench of the supporting substrate. The supporting substrate may include a first substrate with the first trench and a second a second substrate with the second trench, wherein the first substrate is disposed on said second substrate. A membrane is disposed between the first substrate and the second substrate. The light source and the photo detector are disposed on the first substrate.

## Description

### TECHNICAL FIELD

The present invention relates to an optical sensor, and more particularly, to a flexible optical sensor module to measure vibration in an optical sensor system.

### BACKGROUND

Generally, optical sensors are to convert energy of light or electromagnetic waves into electric energy. Background-art optical sensors include photodiodes, avalanche photodiodes, phototransistors, photo-MOSs, CCD sensors and CMOS sensors having semiconductor as their main components, photomultiplier tubes using photoelectric effect, etc.

Of the former semiconductor optical sensors, some are to extract output signal as electric current by converting carriers into the external electric current directly, where the carriers are electron or positive holes generated by irradiation with light. Others are to extract output signal as a modulation of majority electric-current, where the modulation is formed by a local electric field by the photo-generated carriers accumulated in a predetermined local place.

Recently, the use of optical sensors has become more prevalent for sensing applications, particularly in those applications where the sensors must be placed in harsh environments, which seriously affects the performance/reliability of the associated electronics. Fiber optic sensors have an advantage in that they require no electronics at or near the sensor. In fiber optic sensors, light is sent through the optical fiber from a remote location.

Fiber optic sensors generally fall into two categories, those designed for making high speed dynamic measurements, and those designed for low speed, relatively static measurements. Examples of dynamic sensors include hydrophones, geophones, and acoustic velocity sensors, where the signal varies at a rate of 1 Hz and above. Examples of low speed (static) sensors include temperature, hydrostatic pressure, and structural strain, where the rate of signal change may be on the order of seconds, minutes or hours. Many applications relate primarily to dynamic measurements of acceleration, acoustic velocity, and vibration using fiber optic sensors.

### SUMMARY OF THE INVENTION

In this invention, a flexible optical sensor module is proposed. The flexible optical sensor module comprises two parts, an optical module and a vibration sensing unit for detecting signal wave. The vibration sensing unit is a flexible waveguide. The flexible waveguide may be disposed (attached/mounted) on or under a supporting substrate, a membrane or a FPC. The flexible optical sensor module comprises a supporting substrate, a flexible waveguide, a light source and a photo detector. The supporting substrate includes a first substrate with a first trench and a second substrate with a second trench, wherein the first substrate is disposed on the second substrate. In an example, a membrane is included, which may be disposed between the first substrate and the second substrate. In another example, the membrane can be integrated with the flexible waveguide to be as a vibration detection unit. A light source and at least a photo detector are disposed on (above) the substrate. The flexible optical sensor module may be a single optical sensor or an optical sensor array.

According to one aspect, the substrate has optical micro-reflection surface, a concave bench.

According to another aspect, the substrate has an opening for exposing the flexible waveguide or the membrane.

According to yet another aspect, the flexible waveguide has V-shape trench with a reflection plane. The optical (flexible) waveguide may be integrated with the flexible printed circuit (FPC). An inertial sensor may be disposed on the flexible printed circuit extending to a first opening of the flexible printed circuit and a second opening of the optical waveguide.

The light source is capable of emitting visible and invisible light. In one embodiment, at least one groove is formed on the concave structure of the substrate. Based-on the at least one groove of the concave structure, optical component (cable) may be passively aligned to the at least one groove.

### BRIEF DESCRIPTION OF THE DRAWINGS

The components, characteristics and advantages of the present invention may be understood by the detailed descriptions of the preferred embodiments outlined in the specification and the drawings attached:
FIG. 1 illustrates a flexible optical sensor module according to one embodiment of the invention;
FIG. 2 illustrates a flexible optical sensor module according to another embodiment of the invention;
FIG. 3 illustrates a flexible optical sensor module according to a further embodiment of the invention;
FIG. 4 illustrates a flexible optical sensor module according to yet another embodiment of the invention;
FIG. 5 illustrates a flexible optical sensor module according to one embodiment of the invention.
FIG. 6 illustrates a flexible optical sensor module with an inertial sensor and an optical waveguide on FPC according to another embodiment of the invention.
FIG. 7 illustrates a structure of Si-based inertial sensor according to the invention.

### DETAILED DESCRIPTION

Some preferred embodiments of the present invention will now be described in greater detail. However, it should be recognized that the preferred embodiments of the present invention are provided for illustration rather than limiting the present invention. In addition, the present invention can be practiced in a wide range of other embodiments besides those explicitly described, and the scope of the present invention is not expressly limited except as specified in the accompanying claims.

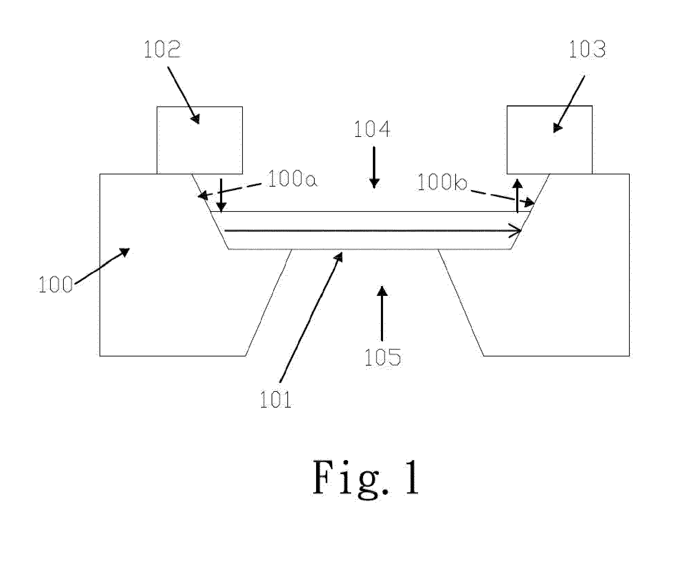

Fig. 1 shows a flexible optical sensor module according to one embodiment of the invention. The flexible optical sensor module can be used as a vibration sensing element (device), which may be made by employing a standard semiconductor manufacturing process. Optical elements are applied to the vibration sensing element as sensing system. The sensing system or sensing device can detect sound waves, mechanical waves, seismic waves, sphygmus and any vibrating wave energy via other mediums. In this embodiment, the flexible optical sensor module comprises a substrate 100, a flexible waveguide 101, a light source 102 and a photo detector 103. The substrate 100 has a first trench 104 and a second trench 105. The first trench 104 has an opening facing up. The second trench 105 has an opening facing down. The substrate 100 has a first optical micro-reflection surface 100a and a second optical micro-reflection surface 100b at two sides of (within) the first trench 104 of the substrate 100. The flexible waveguide 101 is made of a flexible material. The flexible waveguide 101 may be a membrane for vibration detection. The flexible waveguide 101 is disposed (attached/mounted) on bottom surface of the first trench 104 of the substrate 100 for guiding light, while exposing upper surface of the flexible waveguide 101 and exposing partial lower surface of the flexible waveguide 101. The exposed area of the lower surface of the flexible waveguide 101 is equal to the area of bottom surface of the second trench 105. In one embodiment, two sides of the flexible waveguide 101 with inclined plane contact to the first optical micro-reflection surface 100a and the second optical micro-reflection surface 100b, respectively. The flexible waveguide 101 is allowable for optical path therein, for facilitating light irradiated from the light source 102 passing through therein. The bottom surface of the first trench 104 and the bottom surface of the second trench 105 are partially overlapping for exposing partial bottom surface of the flexible waveguide 101. The light source 102 and the photo detector 103 are disposed on (above) two sides of upper surface of the substrate 100. The light source 102 is capable of emitting visible and invisible light. The light source 102 is for example a laser, infrared light or a light emitting diode (LED). Infrared light is in infrared band, which can be emitted by laser or LED.

The substrate 100 is used to be as an optical bench, and has a concave bench on bottom surface of the first trench 104 of the substrate 100 for facilitating the flexible waveguide 101 to be disposed therein, and the optical micro-reflection surface 100a, 100b having a specified angle (such as 45 degree angle or other degree angle). In one embodiment, a first trench (concave structure) 104 of the substrate 100 is in a specified depth beneath the top surface of the substrate 100, and a second trench (concave structure) 105 of the substrate 100 is in a specified depth beneath the bottom surface of the substrate 100. A first reflector is defined at a first end of the first bench 104 of the substrate 100, and a second reflector is defined at a second end of the first bench 104 of the substrate 100. The first end of the first bench 104 of the substrate 100 forms a first reflection surface, and the second end of the first bench 104 of the substrate 100 forms a second reflection surface. The first bench 104 of the substrate 100 has a first slant plane 100a and a second slant plane 100b. In one embodiment, the first slant plane 100a is opposite to the second slant plane 100b.

For example, the light source 102 is located (attached) on top surface of the substrate 100 (near the optical micro-reflection surface 100a) at left side, and the photo detector 103 is located (attached) on top surface of the substrate 100 (near the optical micro-reflection surface 100b) at right side, respectively. Therefore, optical signal emitted by the light source 102 is reflected by the first reflection surface 100a of the substrate 100 and then passing through the flexible waveguide 101, followed by reflected by the second reflection surface 100b of the substrate 100, and received by the photo detector 103.

As signal wave reaches to the flexible waveguide 101 of the flexible optical sensor module (vibration sensing device), the flexible waveguide 101 are vibrated up and down by the signal wave. Optical signal from the light source 102 is influenced by the vibration of the flexible waveguide 101. Therefore, optical power emitted by the light source 102 is changed in the flexible waveguide 101. Partial optical signal passing through the flexible waveguide 101 is leaving off the flexible waveguide 101. Thus, light intensity detected by the photo detector 103 is changed decreasingly with the vibration of the flexible waveguide 101, in comparison with non-vibration of the flexible waveguide 101. The intensity of light detected is converted into electrical signal output. Accordingly, function of vibration-detection can be achieved.

Based-on the sensing of the flexible optical sensor module (vibration sensing device), function of vibration-detection can be achieved. The flexible waveguide is used to be as a vibration-detection component with vibration sensing function for detecting sound waves, mechanical waves, seismic waves, sphygmus ... and shock wave energy arisen by any other medium shocking. The flexible waveguide 101 integrates the light source 102 and the photo detector 103 to be as an optical sensing system. Thus, the present invention uses an optical sensing system as vibration-detection system.

Material and thickness of the substrate 100 and the flexible waveguide 101 may be selected, based-on requirements for practical applications (various signal waves, detected sources). For example, material of the substrate 100 is silicon. Therefore, the first trench 104 and the second trench 105 may be formed by a standard semiconductor process (photolithography process, etching process). For example, the flexible waveguide 101 is a flexible thin film. Material of the flexible waveguide 101 includes polymer material, dielectric material.

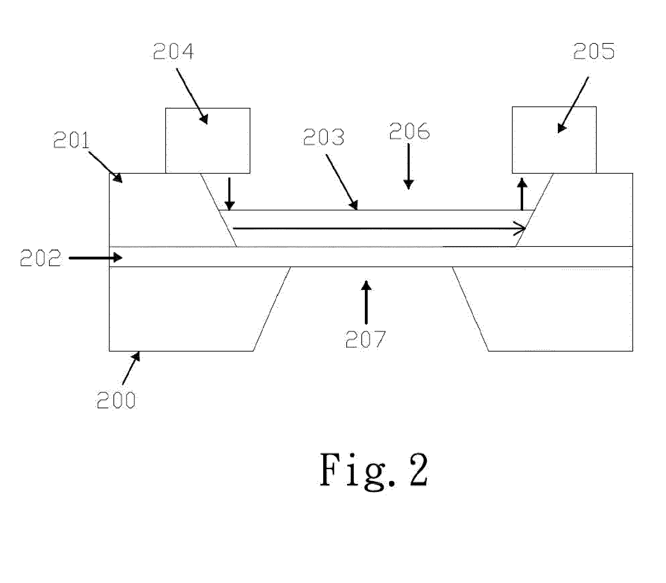

Fig. 2 shows a cross-sectional structure of the flexible optical sensor module according to another embodiment of the invention. In this embodiment, the flexible optical sensor module comprises a first substrate 200, a second substrate 201, a membrane 202, a flexible waveguide 203, a light source 204 and a photo detector 205. The first substrate 200 has a first trench (opening) 206 and the second substrate 201 has a second trench (opening) 207. The first trench 206 faces up. The second trench 207 faces down. Similarly, the first substrate 200 has a first optical micro-reflection surface and a second optical micro-reflection surface at two sides of (within) the first trench 206 of the first substrate 200. The flexible waveguide 203 is made of a flexible material. The membrane 202 is disposed (attached/mounted) between the first substrate 200 and the second substrate 201, while exposing partial lower surface and upper surface of the membrane 202 for detecting signal wave coming from the first substrate side. The exposed area of the lower surface of the membrane 202 is equal to the area of bottom surface of the second trench 207. The flexible waveguide 203 is disposed (attached/mounted) on bottom surface of the membrane 202 within the first trench 206 of the second substrate 201 for guiding light, while exposing upper surface of the flexible waveguide 203 for detecting signal wave coming from the second substrate side. Thus, the flexible waveguide 203 and the membrane 202 may be used for vibration detection. In one embodiment, two sides of the flexible waveguide 203 with inclined plane contact to the first optical micro-reflection surface and the second optical micro-reflection surface, respectively. The light source 204 and the photo detector 205 are disposed on (above) two sides of upper surface of the second substrate 201.

For example, the flexible waveguide 203 is a flexible thin film. Material of the flexible waveguide 203 includes polymer material, dielectric material. The membrane 202 is a thin film. Material of the membrane 202 includes dielectric material, such SiO₂ or SiNₓ.

As signal wave reaches to the membrane 202 and/or the flexible waveguide 203 of the optical sensor module (vibration sensing device), the membrane 202 and/or the flexible waveguide 203 are vibrated by the signal wave. The flexible waveguide 203 and the membrane 202 are then vibrated together because the flexible waveguide 203 is attached on the membrane 103. For example, vibration of the membrane 202 and the flexible waveguide 203 will vibrate up and down together, and therefore light emitted by the light source 204 will be reflected by the second substrate 201 and received by the photo detector 205. As noted above, optical power emitted by the light source 204 is changed in the flexible waveguide 203 due to its vibration, and light intensity detected by the photo detector 205 is changed decreasingly with the vibration of the flexible waveguide 203. The intensity of light detected is converted into electrical signal output. Accordingly, function of vibration-detection can be achieved.

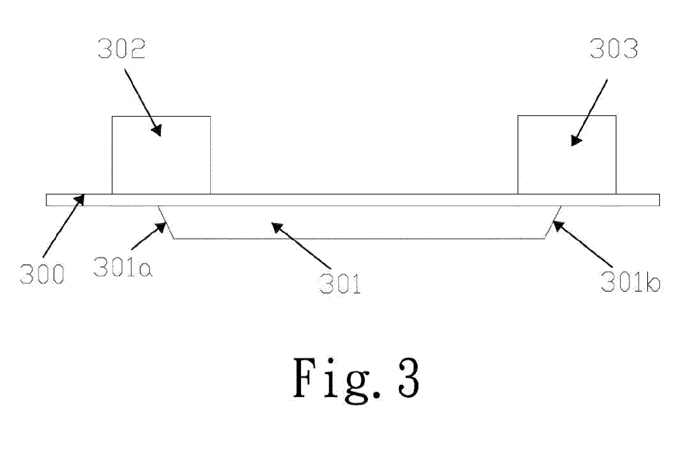

Fig. 3 shows a cross-sectional structure of the flexible optical sensor module according to yet another embodiment of the invention. In this embodiment, the flexible optical sensor module comprises a membrane 300, a flexible waveguide 301, a light source 302 and a photo detector 303. The flexible waveguide 301 is made of a flexible material (layer). In one embodiment, the flexible waveguide 301 is a membrane. In this embodiment, the flexible waveguide 301 is disposed (attached/mounted) under the membrane 300, and the flexible waveguide 301 has a first optical micro-reflection surface 301a and a second optical micro-reflection surface 301b at two sides of the flexible waveguide 301. The flexible waveguide 301 combines with the membrane 300 for vibration detection. Such structure may detect signal wave coming from membrane side and/or flexible waveguide side. Light emitted by the light source 302 may be reflected via the first optical micro-reflection surface 301a and the second optical micro-reflection surface 301b at two sides of the flexible waveguide 301, respectively, and received by the photo detector 303. The light source 302 and the photo detector 303 are disposed on two sides of upper surface of the membrane 300.

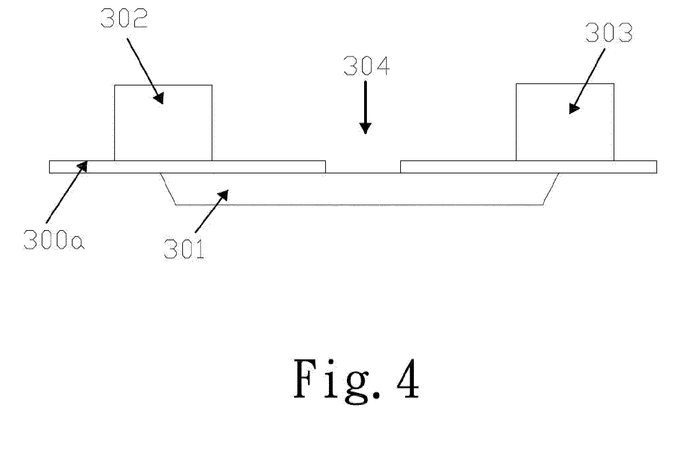

Fig. 4 shows a cross-sectional structure of the flexible optical sensor module according to one embodiment of the invention. In this embodiment, the membrane 300a has an opening 304 to expose a partial upper surface of the flexible waveguide 301 for contacting/detecting signal wave coming from membrane side. Such structure may detect signal wave coming from the membrane side and/or flexible waveguide side.

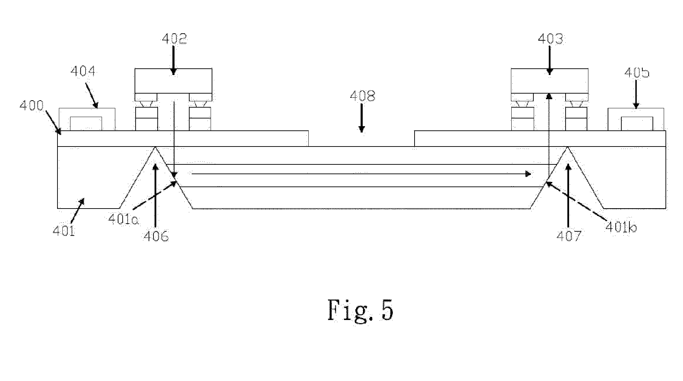

Fig. 5 shows a cross-sectional structure of the flexible optical sensor module according to yet another embodiment of the invention. In this embodiment, the flexible optical sensor module comprises a Flexible Printed Circuit (FPC) 400, a flexible waveguide 401, a light source 402, a photo detector 403, a driver integrated circuit (IC) 404 and a trans-impedance amplifier (TIA) chip 405. In this embodiment, the light source 402, the photo detector 403, the driver integrated circuit (IC) 404 and the trans-impedance amplifier (TIA) chip 405 are configured/ integrated onto the FPC 400. The driver IC 404 may be used to drive the light source (such as optoelectronic device) 402 for emitting light. In this embodiment, the flexible waveguide 401 is disposed (attached/mounted) under the FPC 400. In this embodiment, the FPC 400 has an opening 408 to expose partial upper surface of the flexible waveguide 401 for contacting/detecting signal wave coming from FPC side; and the flexible waveguide 401 has a V-shape trench 406 and a V-shape trench 407 such that a first optical micro-reflection surface 401a and a second optical micro-reflection surface 401b are formed at one side of V-shape trench 406 and another side of V-shape trench 407 of the flexible waveguide 401, respectively. V-shape trench 406 and 407 may be formed by an imprinting process, a wedge cutting process or a laser machining process. The FPC 400 combines with the flexible waveguide 401 for vibration detection. Such structure may detect signal wave coming from FPC side and/or flexible waveguide side. Light emitted by the light source 402 may be reflected via the first optical micro-reflection surface 401a and the second optical micro-reflection surface 401b at two sides of the flexible waveguide 401, respectively. The light source 402, the driver integrated circuit (IC) 404 and the photo detector 403, trans-impedance amplifier (TIA) chip 405 are disposed on two sides of upper surface of the FPC 400, respectively.

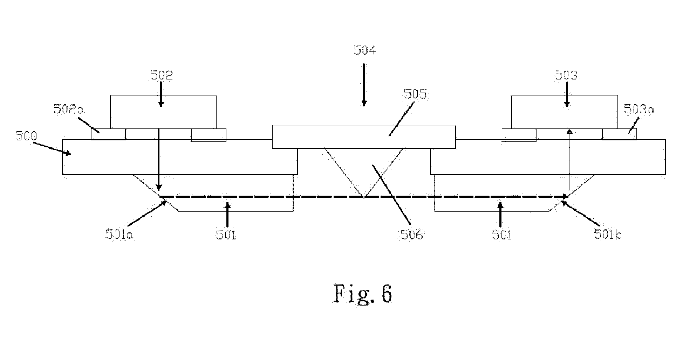

Fig. 6 shows a cross-sectional structure of the flexible optical sensor module with an inertial sensor and an optical waveguide on FPC according to yet another embodiment of the invention. In this embodiment, the flexible optical sensor module comprises a Flexible Printed Circuit (FPC) 500, an optical waveguide 501, a light source 502, a photo detector 503, a driver integrated circuit (IC) and a trans-impedance amplifier (TIA) chip (not shown), and an inertial sensor 504. In this embodiment, the light source 502, the photo detector 503, the driver integrated circuit (IC) and the trans-impedance amplifier (TIA) chip are configured/ integrated onto the FPC 500. In this embodiment, the FPC 500 has an opening for the inertial sensor 504 disposed therein. Another, the inertial sensor 504 is disposed on the FPC 500. The optical waveguide 501 is disposed (attached/mounted) under the FPC 500. In this embodiment, the optical waveguide 501 has an opening to expose inertial sensor 504 extending to the opening, and thereby the inertial sensor 504 capable of detecting signal wave from outside. The optical waveguide 501 has a first optical micro-reflection surface 501a and a second optical micro-reflection surface 501b formed at left side and right side of the optical waveguide 501, respectively. The FPC 500 combines with the optical waveguide 501 for light guiding. The optical waveguide 501 may be as Gbps-data channel. The inertial sensor 504 is composed of a silicon base 505 and a pyramid-shape structure 506 formed thereon used for vibration detection. Such structure may detect signal wave coming from light source side and/or optical waveguide side. Light created (emitted) by the light source 502 may be reflected via the first optical micro-reflection surface 501a and the second optical micro-reflection surface 501b at two sides of the optical waveguide 501, respectively. The light source 502, the driver integrated circuit (IC) and the photo detector 503, trans-impedance amplifier (TIA) chip are disposed on two sides of upper surface of the FPC 500 and coupled to the FPC 500 via an electrical connection pad 502a and electrical connection pad 503a, respectively.

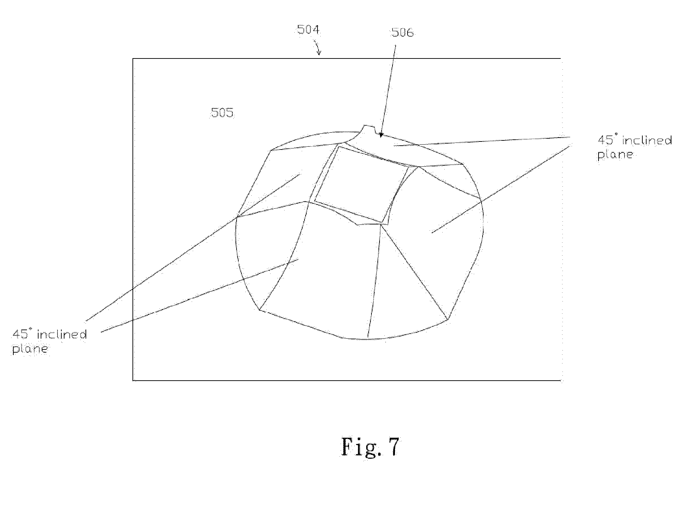

Fig. 7 shows a structure of the inertial sensor according to the invention. The inertial sensor 504 has a pyramid-shape structure for light reflection. The inertial sensor 504 is composed of a base 505 and a pyramid-shape structure 506 formed thereon used for vibration detection. The base 505 is for example a silicon base or silicon dioxide film. The pyramid-shape structure 506 has four 45° inclined planes, and each of the 45° inclined planes may be for blocking and reflecting light from the optical waveguide 501 when the inertial sensor 504 vibrates. In another embodiment, the pyramid-shape structure 506 has a plurality of inclined planes, and each of the plurality inclined planes has 45 degree or arbitrary angle; number of the inclined planes of the pyramid-shape structure 506 and angles of the inclined planes depend on the requirement of applications.

It will be understood that the above descriptions of embodiments are given by way of example only and that various modifications may be made by those with ordinary skill in the art. The above specification, examples and data provide a complete description of the structure and use of exemplary embodiments of the invention. Although various embodiments of the invention have been described above with a certain degree of particularity, or with reference to one or more individual embodiments, those with ordinary skill in the art could make numerous alterations to the disclosed embodiments without departing from the spirit or scope of this invention.

## Claims

1. A flexible optical sensor module, which characterizes in that comprises:
a supporting substrate with a first trench and a second trench, wherein said first trench has a first optical micro-reflection surface and a second optical micro-reflection surface at two sides of said first trench; and
a flexible waveguide disposed on said first trench of said supporting substrate.

2. The flexible optical sensor module of claim 1, wherein said flexible waveguide is a membrane.

3. The flexible optical sensor module of claim 1, said supporting substrate includes a first substrate with said first trench and a second a second substrate with said second trench, wherein said first substrate is disposed on said second substrate.

4. The flexible optical sensor module of claim 3, further comprising a membrane disposed between said first substrate and said second substrate.

5. The flexible optical sensor module of claim 1, further comprising a light source disposed on said first substrate, and a photo detector disposed on said first substrate.

6. A flexible optical sensor module, which characterizes in that comprises:
a membrane; and
a flexible waveguide disposed on said membrane, wherein said flexible waveguide has a first optical micro-reflection surface and a second optical micro-reflection surface at two sides of said flexible waveguide.

7. The flexible optical sensor module of claim 6, wherein said membrane is a flexible thin film.

8. The flexible optical sensor module of claim 6, wherein said membrane has an opening to expose a partial upper surface of said flexible waveguide.

9. The flexible optical sensor module of claim 6, further comprising a light source disposed on said first substrate, and a photo detector disposed on said first substrate.

10. A flexible optical sensor module, which characterizes in that comprises:
a flexible printed circuit with a first opening formed therein; and
an optical waveguide disposed under said flexible printed circuit, wherein said optical waveguide has a first optical micro-reflection surface and a second optical micro-reflection surface.

11. The flexible optical sensor module of claim 10, wherein said optical waveguide is a flexible waveguide.

12. The flexible optical sensor module of claim 11, wherein said flexible waveguide has a first V-shape trench and a second V-shape trench such that said first optical micro-reflection surface and said second optical micro-reflection surface are formed at one side of said first V-shape trench and said second V-shape trench of said flexible waveguide, respectively.

13. The flexible optical sensor module of claim 10, further comprising a light source and a photo detector disposed on said flexible printed circuit.

14. The flexible optical sensor module of claim 10, wherein said optical waveguide has a second opening formed therein, and further comprising an inertial sensor disposed on said flexible printed circuit extending to said first opening and said second opening.

15. The flexible optical sensor module of claim 14, wherein said inertial sensor is composed of a base and a pyramid-shape structure formed thereon.
